**Europäisches Patentamt**

**European Patent Office**

**Office européen des brevets**

(19)

(11) Veröffentlichungsnummer: **0 172 947**
**B1**

(12) EUROPÄISCHE PATENTSCHRIFT

(45) Veröffentlichungstag der Patentschrift:
**20.04.88**

(21) Anmeldenummer: **84201252.8**

(22) Anmeldetag: **30.08.84**

(51) Int. Cl.⁴: **B 23 P  15/00,** C 23 F  1/02 //
B30B15/06, B41N1/06, B44C3/08

(54) Verfahren zur Herstellung von mit einer Prägegravur versehenen Pressblechen.

(43) Veröffentlichungstag der Anmeldung:
**05.03.86 Patentblatt 86/10**

(45) Bekanntmachung des Hinweises auf die Patenterteilung:
**20.04.88 Patentblatt 88/16**

(84) Benannte Vertragsstaaten:
**AT BE CH DE FR GB IT LI LU NL SE**

(56) Entgegenhaltungen:
**EP - A - 0 031 613**

(73) Patentinhaber: **Standex International GmbH, Kölner Strasse 352 - 354, D-4150 Krefeld (DE)**

(72) Erfinder: **Werthmann, Wilfried, Wolfersstrasse 28, D-4150 Krefeld (DE)**

(74) Vertreter: **Ackmann, Günther, Dr.-Ing., Claubergstrasse 24 Postfach 10 09 22, D-4100 Duisburg 1 (DE)**

**Beschreibung**

Die Erfindung betrifft ein Verfahren zur Herstellung von mit einer Prägegravur versehenen grossformatigen Pressblechen, die der Oberflächenbehandlung von Presslaminaten dienen.

Presslaminate in der Art kunststoffbeschichteter Hartfaserplatten, Holzfaserplatten, Holzspanplatten, Glasfaserplatten u. dgl. die im Möbelbau oder in der Raumausstattung Verwendung finden, werden in zunehmendem Masse mit einer in die Oberfläche eingeprägten Strukturierung versehen, deren Muster beliebig sein kann. Zu solchen Mustern gehören beispielsweise Feinstrukturierungen oder Riffelungen, Noppen, aber auch eine Strukturierung in der Art einer Holzmaserung. Das Einprägen der Strukturierung geschieht mit Hilfe von Prägewerkzeugen, die je nach der Herstellungsmethode verschieden sind. Bei der gebräuchlichsten Pressmethode in Etagenpressen finden grossformatige planebene Pressbleche Verwendung, welche mit einer Prägegravur versehen sind. Die Prägegravur wird dabei überwiegend mit Hilfe der Ätzmethode eingearbeitet, wobei eine sogenannte Ätzreserve in einem vorgesehenen Muster auf das Pressblech aufgetragen und der von der Ätzreserve freibleibende Flächenbereich durch eine Ätzbehandlung je nach der Behandlungsdauer verschieden tief weggeätz wird. Der Auftrag des Ätzreservemuster kann beispielsweise durch Aufdrucken oder nach dem sogenannten fotografischen Reproduktionsverfahren erfolgen. Solche Pressbleche sind für viele Pressungen mit den diskontinuierlich arbeitenden Etagenpressen geeignet.

Die bekannten, aus verchromtem Messing, Chromstahl oder Chrom-Nickel-Stahl bestehenden Pressbleche setzen für die Herstellung einer fehlerfreien Ätzgravur ein völlig homogenes Gefüge voraus, das jedoch auch bei einem äussersts sorgfältigen Walzen nicht ausreichend herstellbar ist. Häufig werden Gefügefehler dieser Walzbleche erst beim Ätzverfahren aufgedeckt, obwohl die von den Walzwerken gelieferten Bleche von aussen eine gute Beschaffenheit zeigen. Bleche mit solchen später erkannten Gefügefehlern sind jedoch dann völlig unbrauchar. Da die Erkennung der zunächst verborgenen Gefügefehler erst bei der Ätzbehandlung erfolgt, liegt der Wirtschaftliche Verlust schon bei etwa zwei Drittel der Gesamtkosten. Eine Serienfertigung wird hierdurch erheblich erschwert. Ein weiteres Problem besteht darin, dass nur wenige Walzwerke solche Bleche mit höchster Güteanforderung für einen nur begrenzten Markt herstellen und eine völlige Produktionseinstellung möglich erscheint.

Anderseits ist es bekannt, Presslaminate kontinuierlich zwischen zwei Endlosbändern zu pressen. Dabei wird das Vorprodukt zwischen den beiden in entgegengesetzten Drehrichtungen umlaufenden Endlosbänder gepresst. Auch bei diesem Verfahren kann das die Oberfläche des Presslaminates beaufschlagende Endlosband mit einer Prägestrukturierung versehen sein. Um das mit einer Schweissnaht versehene Endlosband mit einer gleichförmigen und absatzfreien Prägegravur zu versehen, ist aus der EP-BI 0 031 613 bekannt, dass dem Endlosband eine Metallschicht aufgalvanisiert wird, bevor es mit einer Ätzgravur versehen wird, wobei die Dicke der Metallschicht grösser als die Tiefe der Ätgravur ist. Die Metallbeschichtung hat die Aufgabe, die Schweissnaht des Endlosbandes abzudecken und bildet die Schicht, in welche die Prägegravur eingearbeitet werden kann.

Demgegenüber liegt der Erfindung die Aufgabe zugrunde, ein Verfahren der gattungsgemässen Art derart weiterzuentwickeln, dass das Pressblech anstelle eines hochwertigen, im Gefüge völlig homogenen Walzbleches aus einem Walzblech normaler Güte herstellbar ist.

Diese Aufgabe wird dadurch gelöst, dass auf einem Stahlblech normaler Walzgüte eine Metallschicht aufgalvanisiert wird, deren Dicke grösser als die Tiefe der anschliessend aufgebrachten Ätzgravur ist.

Dieses Verfahren hat den Vorteil, dass etwaige, im Gefüge des Walzbleches vorhandene Fehler sich nicht mehr nachteilig auswirken können, da die Gravur nicht mehr in das Walzblech, sondern nur in die aufgalvanisierte Metallschicht eingeätzt wird. Es ist daher möglich, Stahlblech bzw. Wazblech normaler Güte zu verwenden, welches auf dem Markt ausreichend und preiswert erhältlich ist. Vorzugsweise wird das Stahlblech plangeschliffen, ehe die Metallschicht aufgalvanisiert wird. Die Schichtdicke der Metallschicht lässt sich der Ätzmethode anpassen und beispielsweise für eine Mehrfachätzung zur Erzielung stufenförmiger Ätzvertiefungen stärker ausbilden. Sie kann aus einem beliebigen galvanisierten und für die Ätzgravur geeigneten Metall bestehen. Geeignet ist hierfür insbesondere Nickel, Messing oder Kupfer oder eine für die Ätzgravur geeignete Metalllegierung.

Für den Galvanisierungsprozess können die bekannten Verfahren zur Anwendung gelangen, beispielsweise das Tauchverfahren. Durch vorheriges Abdecken einer Fläche des Stahlbleches kann bedarfsweise auch eine einseitige Beschichtung erfolgen.

Bei der herstellung der Ätzgravur wird auf die zuvor geschliffene und polierte Metallschicht eine Ätzreserve aufgetragen. Hierfür sind praktisch alle bekannte Verfahren geeignet, beispielsweise durch Aufdrucken mit Hilfe von entsprechend gemusterten Rollen, Druckwalzen (Siebdruckwalzen, Offendruckwalzen) oder durch Anwendung des fotografischen Reproduktionsverfahrens, bei dem eine fotosensible Schicht aufgetragen, diese über ein das Muster darstellendes Negativ belichtet und die nach dem Entwickeln auf der Oberfläche verbleibenden und dem Muster entsprechenden Flächenteile der Fotoschicht die Ätzreserve bilden. Diese aus dem Auftrag der Ätzreserve und dem Ätzen bestehende Arbeitsweise kann auch mit gleichen oder anderen Mustervorlagen wiederholt werden, so dass auf dem Stahlband eine Musterung in sich durch verschiedene Ätztiefen entsteht.

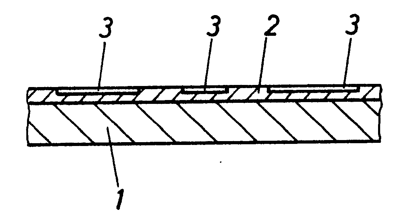

Ein Ausführungsbeispiel der Erfindung ist in der Zeichnung dargestellt.

Das etwa 2,5 bis 10 mm starke Stahlblech 1 hat die für Einetagen — oder Mehretagenpressen verlangten grossformatigen Abmessungen, die in der Regel bis zu 6,6 × 2,7 m betragen oder auch darüber liegen können. Es handelt sich um ein Stahlblech 1 normaler Walzgüte.

Das zuvor plangeschliffene und bedarfsweise polierte Stahlblech wird mit einer Metallschicht versehen. Diese hat je nach der vorgesehenen Ätztiefe und den Abmessungen des Bandes eine Dicke, die zwischen 0,05 und 2 mm liegt. Diese aufgalvanisierte Metallschicht 2 bildet eine völlig ebene und gleichmässige Oberfläche. Für den Galvanisierungsprozess können die bekannten, in der Beschreibungseinleitung genannten Verfahren verwendet werden.

Die Metallschicht 2 besteht aus einem für das Galvanisieren und die Anbringung einer Ätzgravur 3 geeigneten Metall, z.B. Nickel, Kupfer oder einer hierfür geeigneten Legierung, z.B. Messing.

Nachdem die galvanisierte Metallschicht geschliffen und poliert ist, wird eine Prägegravur 3 eingearbeitet. Besonders geeignet hierfür ist das Ätzverfahren, welches für beleibige Muster, einschliesslich solcher mit feinsten Details, wie auch für eine mehrstufige Gravur eine vielfältige Anwendung ermöglicht. Eine gut reproduzierbare Methode besteht beispielsweise darin, dass mit einer Druckwalze, die ihrerseits anhand einer Kopiervorlage mit einer Prägegravur in einem bestimmten Muster versehen ist, Ätzreserve auf die Oberfläche des Stahlbleches 1 aufgedruckt wird. Das geschieht durch einfaches Abrolles des Stahlbleches 1 an der Druckwalze oder umgekehrt. Das mit der Ätzreserve in dem vorgesehenen Muster bedruckte Stahlblech 1 wird dann mittels einer Ätzlösung behandelt, wobei die nicht mit der Ätzreserve bedeckten Flächenbereiche der Metallschicht 2 angeätzt werden und dort entsprechende, die Gravur bildende Vertiefungen entstehen. Nach der Ätzbehandlung und Entfernung der Ätzreserve kann die «gravierte» Oberfläche ein oder mehreren weiteren Behandlungen dieser Art unterworfen werden, wobei z.B. Ätzreserveaufträge in anderen Mustern oder in gleichen, jedoch versetzten Mustern aufgedruckt werden. Es entstehen hierdurch mehrstufige Ätzfiguren, wobei z.B. in die Fläche einer ersten Vertiefung weitere Vertiefungen eingeätzt werden können.

Nach Fertigstellung der Ätzgrevur wird die Oberfläche des Stahlblechs 1 in üblicher Weise verchromt. Damit ist das mit der gewünschten Prägegravur versehene Stahlblech 1 für den Gebrauch in einer Ein- oder Mehretagenpresse fertig.

## Patentansprüche

1. Verfahren zur Herstellung von mit einer Prägegravur versehenen grossformatigen Pressblechen, die der Oberflächenbehandlung von Presslaminaten dienen, dadurch gekennzeichnet, dass auf einem Stahlblech normaler Walzgüte (1) eine Metallschicht (2) aufgalvanisiert wird, deren Dicke grösser als die Tiefe der anschliessend aufgebrachten Ätzgravur (3) ist.

2. Verfahren nach Anspruch 1, dadurch gekennzeichnet, dass das Stahlblech (1) vor dem Aufgalvanisieren der Metallschicht (2) plangeschliffen wird.

## Claims

1. A method of producing large-size pressure plates engraved for embossing and used for surface treatment of pressed laminates, characterised in that a metal layer (2) is electrodeposited on to a steel plate (1) of normal rolled quality, the thickness of the metal layer being greater than the depth of the subsequent etched engraving (3).

2. A method according to claim 1, characterised in that the steel plate (1) is ground flat before the metal layer (2) is electrodeposited.

## Revendications

1. Procédé pour fabriquer des plaques pour des presses de grand format, qui comportent une gravure et servent à réaliser le traitement superficial de stratifié obtenus par pressage, caractérisé par le fait qu'on dépose par galvanisation, sur une tôle d'acier (1) possédant une aptitude normale au laminage, une couche métallique (2) dont l'épaisseur est supérieure à la profondeur de la gravure (3) ménagée ultérieurement.

2. Procédé suivant la revendication 1, caractérisé par le fait qu'on réalise la rectification plane de la tôle d'acier (1) avant le dépôt par galvanisation de la couche métallique (2).